# EUROPÄISCHE PATENTANMELDUNG

(11) **EP 3 401 194 A1**
(43) Veröffentlichungstag der Anmeldung: **14.11.2018**
(21) Anmeldenummer: 18170854.6
(22) Anmeldetag: 04.05.2018
(51) Int. Cl.: B62D 35/00

(54) **LUFTLEITFLÄCHENANORDNUNG UND KRAFTFAHRZEUG MIT EINER DERARTIGEN LUFTLEITFLÄCHENANORDNUNG**

(30) Priorität: 04.05.2017 DE 102017109602
(71) Anmelder: Alpha Team GmbH, 52068 Aachen (DE)
(72) Erfinder: Jaber, Abdullah, 52068 Aachen (DE); Mazyek, Raid, 52068 Aachen (DE)
(74) Vertreter: Reuther, Martin

(57) **Zusammenfassung**

Um eine wirkungsvolle und kostengünstige Luftleitflächenanordnung sowie ein Kraftfahrzeug mit einer derartigen Luftleitflächenanordnung bereitzustellen, kann sich eine Luftleitflächenanordnung mit einer Leitfläche, entlang welcher ein Luftstrom leitbar ist und welche wenigstens ein eigensteifes und biegeelastisches Flächenelement mit einer den Luftstrom leitenden Außenseite und einer Innenseite umfasst, durch wenigstens ein Druckelement und wenigstens ein Zugelement entlang einer Luftleitlinie gegen die Eigensteifigkeit und Biegeelastizität des Flächenelements gebogenes Flächenelement auszeichnen.

## Beschreibung

Die Erfindung betrifft eine Luftleitflächenanordnung zum Senken des Strömungswiderstandes von Fahrzeugen, insbesondere von Kraftfahrzeugen sowie ein Kraftfahrzeug mit einer derartigen Luftleitflächenanordnung.

Derartige Luftleitflächenanordnungen sind beispielsweise aus der DE 31 15 742 A1, aus der GB 2 148 207 A1, aus der US 6,409,252, aus der US 5,236,347, aus der US 5,058,945, aus der US 4,978,162, aus der US 4,702,509, aus der US 4,601,508, aus der US 4,236,745, aus der US 4,006,932, aus der DE 10 2008 006 365 A1 oder aus der DE 10 2012 011 971 A1 bekannt.

Hierbei gibt es einerseits starre Konstruktionen, wie sie beispielsweise in der DE 10 2008 006 365 A1 oder auch der US 4,236,745 offenbart sind. Andererseits finden sich im Stand der Technik eine Vielzahl von aufblasbarer Konstruktion, wobei ein Teil dieser Anordnungen mittels eines separaten, Druck aufbauenden und auch evakuierenden Pumpensystems arbeitet, wie beispielsweise in der GB 2 148 207 A oder der US 4,006,932 offenbart, während andere Systeme, wie insbesondere die US 6,409,252, die US 5,236,347 und die US 4,978,162 sowie diverse andere Druckschriften offenbaren, den Fahrwind für einen Druckaufbau nutzen, um dann eine Vakuumpumpe oder die natürliche Leckage für ein Entleeren zu nutzen.

Insbesondere sind auch Luftleitflächenanordnungen mit einer Leitfläche, entlang welcher ein Luftstrom leitbar ist und welche wenigstens ein eigensteifes und biegeelastisches Flächenelement mit einer den Luftstrom leitenden Außenseite und einer Innenseite umfasst, beispielsweise aus der DE 195 24 825 A1 bekannt, wobei dort das Flächenelement durch eine Platte dargestellt ist, die über ein Druckelement in einen Luftleitzustand und in einen Bereitstellungszustand geklappt werden kann.

Auffällig ist, dass der trotz der theoretischen und auch in Praxistests erkennbaren Vorteile hinsichtlich des Energieverbrauchs bei Kraftfahrzeugen, insbesondere bei Nutzfahrzeugen, derartige Luftleitflächenanordnungen am Markt nicht zu finden sind.

Es ist Aufgabe vorliegender Erfindung, eine wirkungsvolle und kostengünstige Luftleitflächenanordnung sowie ein Kraftfahrzeug mit einer derartigen Luftleitflächenanordnung bereitzustellen.

Die Aufgabe der Erfindung wird durch Luftleitflächenanordnungen bzw. Kraftfahrzeuge mit den Merkmalen der unabhängigen Ansprüche gelöst. Weitere, ggf. auch unabhängig hiervon, vorteilhafte Ausgestaltungen finden sich in den Unteransprüchen sowie der nachfolgenden Beschreibung.

So kann sich einer Luftleitflächenanordnung mit einer Leitfläche, entlang welcher ein Luftstrom leitbar ist und welche wenigstens ein eigensteifes und biegeelastisches Flächenelement mit einer den Luftstrom umleitenden Außenseite und einer Innenseite umfasst, dadurch auszeichnen, dass das Flächenelement durch wenigstens ein Druckelement und wenigstens ein Zugelement entlang einer Luftleitlinie gegen die Eigensteifigkeit und Biegeelastizität des Flächenelements gebogen bzw. biegbar ist. Hierdurch kann eine wirkungsvolle und kostengünstige Luftleitflächenanordnung bereitgestellt werden.

Durch die das Verbiegen des Flächenelements kann dieses in eine strömungsgünstige Form gebracht werden. Dieses ist bei der Anordnung nach der DE 195 24 825 A1 nicht vorgesehen, bei welcher das Flächenelement zwar naturgemäß, da es sich um einen festen Körper handelt, eigensteif und in gewissem Maße biegeelastisch ist, wobei jedoch diese Eigenschaften nicht ausgenutzt werden, um die Form des Flächenelements von der einer Platte abweichend zu ändern.

Hierbei kann das Druckelement zwischen dem Zugelement und einem Ankerelement auf das Flächenelement wirken, wodurch das Biegen auf letztlich einfache Weise präzise erfolgen kann. Hierbei sollte es in der Regel ausreichend sein, wenn eine derartige Anordnung in einem Schnitt durch das Flächenelement zu finden ist, wobei es nicht zwingend erforderlich erscheint, das Druckelement und das Zugelement, und ggf. auch das Ankerelement, jeweils auf derselben Schnittlinie anzuordnen, da letztlich die Eigensteifigkeit des Flächenelements diesbezüglich ausgleichend wirken kann.

Hierbei kann das Ankerelement insbesondere dazu dienen, Zugkräfte, die den Druckkräften des Druckelements entgegenwirken, aufzubringen.

Auch kann das Druckelement vorzugsweise entlang der Luftleitlinie wirken, um einen einfachen Aufbau und eine präzise Ausformung der Luftleitlinie zu erreichen. Um die Anpassung der Luftleitlinie an bestimmte Erfordernisse zu ermöglichen, ist es kumulativ bzw. alternativ von Vorteil, wenn das Druckelement in einer die Luftleitlinie schneidenden Ebene, zwischen dem Zugelement und einem Ankerelement auf das Flächenelement wirkt.

Vorteilhafterweise ist das Ankerelement durch ein Drehgelenk gebildet, weil durch die Ausbildung als Drehgelenk ein einfaches Ein- und Ausklappen der Leitfläche bzw. des Flächenelements möglich ist.

Ggf. können das Druckelement und das Ankerelement auch in einem gemeinsamen Zug-Druck-Element verwirklicht werden, welches sowohl die Druckkräfte als auch die Zugkräfte aufbringen kann.

In vorliegendem Zusammenhang sind die Zugkräfte vorzugsweise von der Außenseite des Flächenelements zur Innenseite hin gerichtet, während die Druckkräfte vorzugsweise von der Innenseite zur Außenseite des Flächenelements gerichtet sind.

Es versteht sich, dass die Leitfläche, das Flächenelement und/oder das Zugelement vorzugsweise über mehr als 10 cm, insbesondere über 15 cm, erstreckt sein sollten, um eine ausreichende Wirkung erzielen zu können. Insoweit sollte der Biegeradius auch zumindest über 5 cm, insbesondere über 7,5 cm, liegen.

Die Luftleitflächenanordnung sollte andererseits nicht mehr als 150 cm, insbesondere nicht mehr als 120 cm, über das Kraftfahrzeug hinausstehen, da dann andere Anordnungen vorteilhafter erscheinen. Dementsprechend sollte die Leitfläche, das Flächenelement und/oder das Zugelement vorzugsweise nicht mehr als 150 cm, insbesondere nicht mehr als 120 cm, erstreckt sein.

Insoweit ist auch vorteilhaft, wenn der Krümmungsradius 150 cm, insbesondere 120 cm, nicht überschreitet.

Um möglichst einfach und damit kostengünstig eine entsprechende Luftleitflächenanordnung bereitstellen zu können, kann das Flächenelement und vorzugsweise die Leitfläche senkrecht zur Luftleitlinie eben ausgebildet sein. Für die meisten Anwendungsfälle ist die ebene Ausbildung ausreichend bzw. durch weitere Flächenelemente oder ergänzende Leitflächen können bei Bedarf auch Anpassungen leicht realisiert werden.

Es ist weiterhin auch von Vorteil, wenn die Luftleitflächenanordnung einen Luftleitzustand aufweist, in welchem das Flächenelement entlang der Luftleitlinie gebogen ist, und einen Bereitstellungszustand aufweist, in welchem das Flächenelement, das Druckelement und/oder das Zugelement entlastet sind. Durch vorstehend genannten Luftleitzustand kann das Flächenelement bzw. die Leitfläche entspannt und dann raumsparend an einem Fahrzeug bereitgehalten werden, beispielsweise bei Stadtfahrten, Ladetätigkeiten, Rangierfahrten, Rückwärtsfahrten oder Fahrten ohne Auflieger, bis diese wieder benötigt werden.

Damit die Luftleitflächenanordnung dann nicht unter Spannung steht und leicht gehandhabt werden kann, ist es vorteilhaft, wenn die Luftleitflächenanordnung, insbesondere die Leitfläche und/oder das Flächenelement, in dem Bereitstellungszustand entspannt sind.

Des Weiteren ist es von Vorteil, wenn das Druckelement ziehend auf das Flächenelement wirken kann. Bei einer geeigneten Umsetzung kann dann das Druckelement im Luftleitzustand drückend und im Bereitstellungszustand ziehend auf das Flächenelement wirken. Genannte Wirkweisen des Druckelements bringen den Vorteil mit sich, dass durch den Zug das Flächenelement im Bereitstellungszustand in eine vorbestimmte bzw. gewählte Position gebracht werden und dennoch in dem Luftleitzustand geeignet auf das Flächenelement drückend wirken kann.

Es kann auch vorteilhaft sein, wenn das Druckelement pneumatisch und/oder als Drucksack oder Druck-Saug-Sack ausgebildet ist, um auf diese Weise einen einfachen und robusten Aufbau sowie Betrieb mit einem Bordkompressor des Kraftfahrzeugs zu ermöglichen. Hierbei ermöglicht die Ausgestaltung als Druck-Saug-Sack insbesondere, dass durch das Druckelement auch ziehend wirken kann. Auch kann ein Entspannen des Druckelements durch einen Saugvorgang erheblich beschleunigt werden.

Ggf. kann an dieser Stelle auch ein Pneumatikzylinder zum Einsatz kommen.

Alternativ kann das Druckelement hydraulisch oder elektrisch angetrieben sein. Hierzu können beispielsweise Hydraulikzylinder zur Anwendung kommen, wobei hier ggf. ein Rückholen auch hydraulisch erfolgen kann. Ggf. kann jedoch auch eine Rückholfeder vorgesehen sein, gegen welche ein Antrieb arbeitet, so dass der Antrieb nicht zwingend bidirektional wirksam sein muss. Als elektrischer Antrieb bieten sich insbesondere ein Linearmotor oder ein Spindelantrieb an.

Vorzugsweise umfasst das Zugelement zumindest ein erstes Teilzugelement und ein zweites Teilzugelement, die linear unabhängig auf das Flächenelement wirken bzw. wirken können. Hierdurch kann die Zugkraft auf baulich einfache Weise, insbesondere im Zusammenspiel mit nicht eigensteifen Zugelementen, genau gerichtet und exakt an gewünschter Position aufgebracht werden. Als derartige nicht eigensteife Zugelemente können beispielsweise Drähte, Seile oder textile bzw. textilähnliche Elemente, wie Stoffbahnen und ähnliches, zur Anwendung kommen.

Es ist vorteilhaft, wenn das erste Teilzugelement in einem Winkel α zwischen 80° und 100° vorzugsweise in einem Winkel α von 90°, an dem Flächenelement angreift. Ein genannter Angriff im genannten Winkel hat den Vorteil, dass die Kraft effektiv in die richtige Richtung auf das Flächenelement auf baulich einfache Weise wirkt. Dieses gilt insbesondere im Zusammenspiel mit nicht eigensteifen Zugelementen.

Darüber hinaus kann das zweite Teilzugelement in einem Winkel β zwischen 80° und 100°, vorzugsweise in einem Winkel β von 90°, zu einer zwischen dem Ankerelement und einem Fuß des ersten Teilzugelements ausgebildeten Linie einen Fuß aufweisen, um eine gute Positionsbestimmung und Ausrichtung des Zugelements in Bezug auf das Flächenelement auf bauliche einfache Weise, insbesondere im Zusammenspiel mit nicht eigensteifen Zugelementen, zu gewährleisten.

Um baulich einfach, insbesondere im Zusammenspiel mit nicht eigensteifen Zugelementen, eine entsprechende Luftleitflächenanordnung umzusetzen, kann vorteilhafterweise zumindest eines und vorzugsweise beide der Teilzugelemente senkrecht zur Luftlinie eben ausgebildet sein.

Auch können das Zugelement bzw. zumindest eines und vorzugsweise beide Teilzugelemente nur auf Zug beanspruchbare Elemente und/oder flächige Elemente, vorzugsweise textile Flächenelemente, sein. Eine derartige Ausbildung der Elemente ist baulich einfach, insbesondere im Zusammenspiel mit nicht eigensteifen Zugelementen, umzusetzen.

Vorzugsweise greift das Zugelement an einer Luftstromabrisskante des Flaschenelements an, um eine gut definierte Luftleitlinie beziehungsweise Biegelinie des Flächenelements bereitzustellen.

Es ist von Vorteil, wenn das Zugelement über eine Linienverbindung mit dem Flächenelement wirkverbunden ist, da auf diese Weise eine gute Kraftverteilung und gute Definition der gebogenen Form des Flächenelements möglich ist. Beispielsweise kann eine Linienverbindung mittels einer Kederverbindung auf baulich einfache und an sich auch in der Nutzfahrzeugindustrie bekannte Weise realisiert werden.

Außerdem kann die Luftleitflächenanordnung vorteilhafterweise wenigstens zwei Leitflächen aufweisen, wobei die Luftleitlinien der beiden Leitflächen unterschiedlich ausgebildet sind. Hierdurch ist eine bauliche Anpassung an unterschiedliche räumliche und strömungstechnische Gegebenheiten möglich.

Des Weiteren können, um eine einfache Montage und Demontage zu ermöglichen, das Flächenelement, das Ankerelement, das Druckelement und/oder das Zugelement an einem Träger befestigt sein. Es reicht dann aus, lediglich den Träger an dem entsprechenden Kraftfahrzeug zu befestigen, so dass dann die entsprechenden Elemente auch, in der Regel mittelbar über den Träger, an dem Kraftfahrzeug befestigt sind. Hierbei versteht es sich, dass vorzugsweise das Flächenelement, das Ankerelement, das Druckelement und das Zugelement an dem Träger befestigt sind, so dass der entsprechende Vorteil für die gesamte Baugruppe aus diesen Elementen genutzt werden kann, wobei es sich versteht, dass schon die Befestigung zweier dieser Elemente an einem gemeinsamen Träger, der dann an dem Kraftfahrzeug befestigt werden kann bzw. befestigt ist, entsprechende Vorteile bringen kann.

So kann sich auch ein Kraftfahrzeug mit einer Luftleitflächenanordnung mit einen der vorstehen genannten Merkmale an einer Baugruppe des Kraftfahrzeuges, wie an einer Heckklappe oder an einem Führerhaus, dadurch auszeichnen, dass der Träger, das Flächenelement, das Ankerelement, das Druckelement und/oder das Zugelement an der Baugruppe des Kraftfahrzeuges befestigt sind, um die vorstehend genannten Vorteile erzielen zu können.

Es versteht sich, dass die Merkmale der vorstehend bzw. in den Ansprüchen beschriebenen Lösungen gegebenenfalls auch kombiniert werden können, um die Vorteile entsprechend kumuliert umsetzen zu können.

Weitere Vorteile, Ziele und Eigenschaften vorliegender Erfindung werden anhand nachfolgender Beschreibung von Ausführungsbeispielen erläutert, die insbesondere auch in anliegender Zeichnung dargestellt sind. In der Zeichnung zeigen:
- Figur 1: ein Kraftfahrzeug mit einer Luftleitflächenanordnung im Luftleitzustand in schematischer Seitenansicht;
- Figur 2: die Anordnung nach Fig. 1 in Aufsicht;
- Figur 3: die Anordnung nach Fign. 1 und 2 in einer Ansicht von hinten;
- Figur 4: einen schematischen Schnitt entlang der Linie IV-IV aus Fig. 3;
- Figur 5: den Ausschnitt V nach Fig. 4 vergrößert;
- Figur 6: den Ausschnitt VI nach Fig. 4 vergrößert;
- Figur 7: den Druck-Saug-Sack nach Fign. 4 und 5 in einer schematischen Einzeldarstellung;
- Figur 8: die Anordnung nach Fign. 3 bis 7 im Bereitstellungszustand;
- Figur 9: den Ausschnitt IX nach Fig. 8 vergrößert;
- Figur 10: eine der Anordnung nach Fign. 1 bis 9 ähnliche Anordnung mit kleinerem DruckSaug-Sack in ähnlicher Darstellung wie Fig. 4;
- Figur 11: eine den Anordnungen nach Fign. 1 bis 10 ähnliche Anordnung mit einem in zwei Richtungen wirksamen Hydraulikzylinder statt des Druck-Saug-Sacks in ähnlicher Darstellung wie Fign. 4 und 10;
- Figur 12: eine der Anordnung nach Fig. 11 ähnliche Anordnung mit einem elektrischen Spindelantrieb statt des Hydraulikzylinders;
- Figur 13: eine alternative Luftleitflächenanordnung in ähnlicher Darstellung wie Fign. 4 und 8;
- Figur 14: die Anordnung nach Fig. 13 in perspektivischer Darstellung;
- Figur 15: die Anordnung nach Fign. 13 und 14 in einer anderen perspektivischen Darstellung;
- Figur 16: die Heckseite eines Kraftfahrzeugs mit der Luftleitflächenanordnung nach Fign. 13 bis 15;
- Figur 17: einen Schnitt durch eine weiter in Fig. 16 dargestellte Luftleitflächenanordnung entlang der Linie XVII-XVII in Fig. 16 in einem Luftleitzustand;
- Figur 18: die Anordnung nach Fig. 17 in ähnlicher Darstellung wie Fig. 17 in einem Bereitstellungszustand; und
- Figur 19: die Anordnung nach Fign. 17 und 18 in ihrem Luftleitzustand in perspektivischer Darstellung.

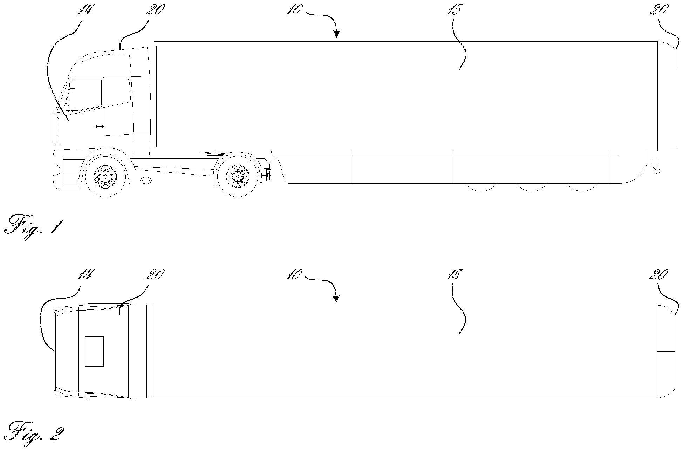

Das in den Figuren 1 bis 3 dargestellte Kraftfahrzeug 10 umfasst eine Zugmaschine 14 mit einem Führerhaus und eine an die Zugmaschine 14 gekoppelten Auflieger 15. An dem in Fahrtrichtung gesehenen hinteren Ende des Führerhauses der Zugmaschine 14 sowie an dem in Fahrtrichtung gesehenen hinteren Ende des Aufliegers 15 sind jeweils Luftleitflächenanordnungen 20 angeordnet. Als Fahrtrichtung wird hierbei die Vorwärtsbewegung des Kraftfahrzeugs 10 bezeichnet.

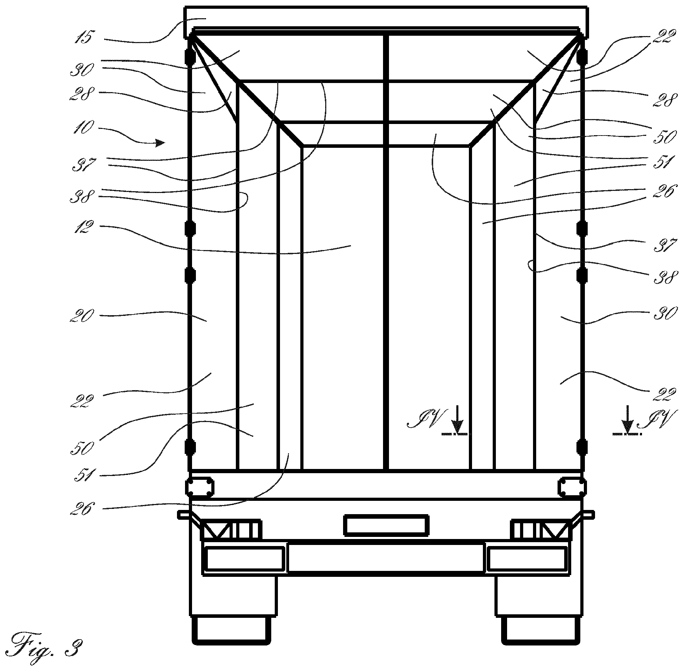

Die Luftleitflächenanordnung 20 am Auflieger 15 ist, wie insbesondere Figuren 2 und 3 zeigen, zweigeteilt, was insbesondere die Zugänglichkeit des Aufliegers 15 sicherstellt, da in den meisten Fällen auch der Zugang zum Auflieger 15 über eine zweigeteilten Heckklappe 12 geschieht. Es versteht sich, dass der Zugang zum Auflieger über verschiedenartige Zugänge, beispielsweise einteilig, dreiteilig oder mehrteilig bzw. als Roll- oder Lamellentor, ausgebildet sein kann. Hierbei ist es dann von Vorteil, die Luftleitflächenanordnung 20 entsprechend der Ausbildung des Zugangs angepasst auszubilden.

Die Luftleitflächenanordnung 20 umfasst Leitflächen 22, welche so dicht als möglich an den Seitenkanten und der Oberkante des Aufliegers 15 anschließen. So kann ein Luftstrom 19 an allen außen liegenden Seiten des Aufliegers 15 über die Leitflächen 22 entlang strömen. Zwischen den seitlichen Leitflächen 22 und der oberen Leitfläche 22 sind jeweils Ausnehmungen 28 angeordnet, damit die jeweiligen Leitflächen sich nicht überschneiden.

Die Ausnehmungen 28 sind durch ein dünneres Flächenelement 30 an dieser Stelle dargestellt und sollen einen Überlapp der im Bereitstellungszustand übereinanderliegenden Bereiche der beiden Flächenelemente 30 mit möglichst geringer Erhöhung ermöglichen, um der Gesamtanordnung ein formschönes Äußeres zu verleihen und diese zu stabilisieren.

Die Luftleitflächenanordnung 20 umfasst Flächenelemente 30, welche jeweils die Leitfläche 22 bilden. Genanntes Flächenelement 30 setzt so nah, wie möglich, an der hinteren Kante des Aufliegers 15 an.

Das Flächenelement 30 umfasst eine dem Auflieger 15 zugewandte Innenseite 33 sowie eine der Innenseite 33 gegenüberliegende Außenseite 32, wobei der Luftstrom 19 an der Außenseite 32 bis zu einer Luftstromabrisskante 38 vorbeiströmt.

Das Flächenelement 30 weist an seinem dem Auflieger 15 abgewandten Ende bzw. an der Luftstromabrisskante 38 eine Linienverbindung 37 in Form einer Kederverbindung 59 auf, an welcher ein Zugelement 50 angreift und an dem Flächenelement 30 zieht. Auch ist unmittelbar hinter der Verbindungsstelle zwischen Flächenelement 30 und Auflieger 15 ein Druckelement 40 angeordnet. Durch den Zug des Zugelements 50 auf das Flächenelement 30 biegt sich das Flächenelement 30 um das Druckelement 40. Der Zug des Zugelements 50 wird einem Träger 24 aufgegeben, der bei diesem Ausführungsbeispiel durch eine Trägerplatte 25 realisiert ist.

Das Zugelement 50 ist bei vorliegendem Ausführungsbeispiel zweiteilig ausgebildet und umfasst jeweils ein erstes Teilzugelement 51 und ein zweites Teilzugelement 52. An ihren der Luftstromabrisskante 38 abgewandten Seite definierte Füße 53, 54 der Teilzugelemente 51, 52 sind jeweils ebenfalls Linienverbindungen 37 in Form von Kederverbindungen 59 vorgesehen, die jeweils eine Verbindung zu dem Träger 24 ermöglichen. Durch die beiden Teilzugelemente 51, 52 wird auf das Flächenelement 30 in zwei Richtungen eine Zugkraft ausgeübt, so dass beide Teilzugelemente 51, 52 insgesamt das Zugelement 50 bilden. Hierdurch kann eine genau Positionierung der Luftstromabrisskante 38 unter Berücksichtigung der drückenden Wirkung des Druckelements 40 gewährleistet werden, was wiederrum eine möglichst genau Ausformung der Krümmung der Leitfläche 22 in ihrem Luftleitzustand und somit auch der zugehörigen Luftleitlinie 39 ermöglicht.

Es versteht sich, dass die Luftleitlinien 39 der verschiedenen Leitflächen 22 unterschiedlich in ihrer Ausrichtung ausgebildet sind, abhängig von der jeweiligen Anordnung an dem Kraftfahrzeug 10. Auch ist es denkbar, die Krümmung und Länge der Luftleitlinien 39 der verschiedenen Leitflächen 22 je nach konkreten Erfordernissen untereinander unterschiedlich zu wählen.

Je nach konkreter Umsetzung können in abweichenden Ausführungsformen statt der Kederverbindungen 39 andere Linienverbindungen 39, beispielsweise mit einen Textil verschraubte Klavierscharniere oder Verschweißungen, vorgesehen sein.

Das Flächenelement 30 ist über ein Ankerelement 60, welches bei diesem Ausführungsbeispiel als Drehgelenk 62 ausgebildet ist, an der Trägerplatte 25 befestigt. Auf diese Weise kann das Druckelement 40 im Zusammenspiel mit dem Zugelement 50 das Flächenelement 30 mit der gewünschten Luftleitlinie 39 krümmen.

Durch die auf das Flächenelement durch das Zugelement 50 ausgeübte Kraft und die Biegung des Flächenelements 30 um das Druckelement 40, entsteht ein Winkel α zwischen Flächenelement 30 und dem ersten Teilzugelement 51, wobei auch das zweite Teilzugelement 52 einen Winkel β zu der an dem Auflieger 15 angeordneten Trägerplatte 25 bzw. zu einer Linie 71 zwischen dem Ankerelement 60 und dem Fuß des ersten Teilzugelements 51 aufweist. Die Winkel α und β betragen bei diesem Ausführungsbeispiel 90°, was zu besonders stabilen Verhältnissen führt.

Bei vorliegendem Ausführungsbeispiel sind die beiden Teilzugelemente 51, 52 bzw. das Zugelement 50 jeweils als textile Flächenelemente 55 ausgebildet, was an sich für vorliegende Zwecke eine ausreichend stabile und vor allem auch leichte Ausgestaltung ermöglicht. Hierdurch sind die Zugelemente 50 jeweils nur auf Zug beanspruchbar, was jedoch ebenfalls für vorliegenden Zusammenhang ausreichend ist. In einer alternativen Ausgestaltung können als nur aus Zug beanspruchbare Elemente beispielsweise Netze, Seile, Drähte oder Schnüre zur Anwendung kommen, was jedoch die Gefahr von Verschmutzungen oder etwaigen Beschädigungen zu erhöhen scheint.

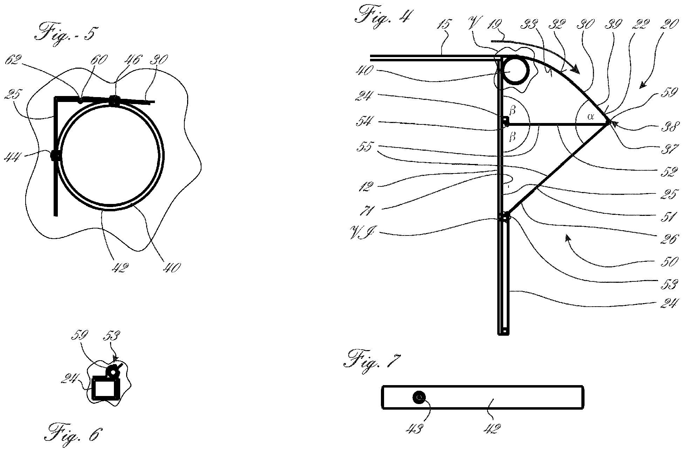

In der Figur 5 ist das Druckelement 40 im Detail dargestellt, welches über eine Befestigung 44 an der Trägerplatte 25 sowie über eine Befestigung 46 an dem Flächenelement 30 befestigt ist. Bei vorliegendem Ausführungsbeispiel erfolgt sind die Befestigungen 44, 46 jeweils Schraubverbindungen, wobei hier letztlich jede geeignete Befestigungsart zur Anwendung kommen kann.

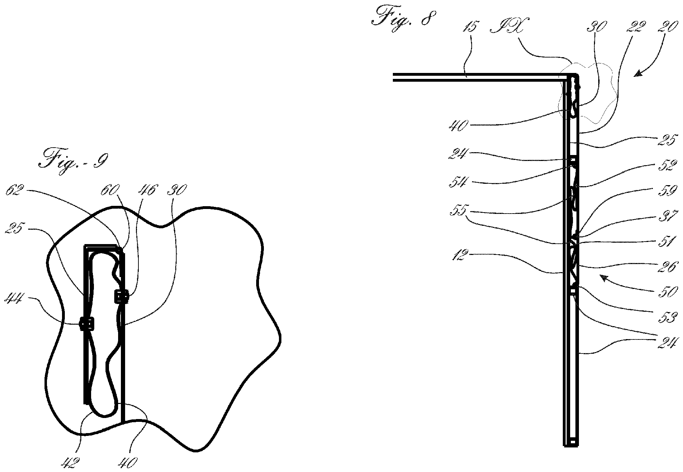

Das Druckelement 40 ist bei diesem Ausführungsbeispiel als Druck-Saug-Sack 42 ausgebildet, so dass hierdurch auch das Flächenelement 30 in seinen Bereitstellungszustand, wie in Figuren 8 und 9 dargestellt, gezogen werden kann.

Wie der Figur 7 zu entnehmen, umfasst der Druck-Saug-Sack 42 ein Ventil 43, über welches Luft in den Druck-Saug-Sack 42 aufgegeben bzw. absaugt werden kann, damit sich der Druck-Saug-Sack 42 entsprechend aufbläst oder entleert.

Der Druck-Saug-Sack 42 kann über ein Ventil 43 mit dem pneumatischen System des Kraftfahrzeugs 10 verbunden werden. Das Ventil 43 hat hierbei zwei Betriebsstellungen; in einer ersten Betriebsstellung wird der Luftdruck aus dem pneumatischen System des Kraftfahrzeugs 10 zum Erzeugen eines Drucks in dem Druck-Saug-Sack 42 genutzt, was dem Luftleitzustand entspricht, während in der zweiten Betriebsstellung der Luftdruck aus dem pneumatischen System des Kraftfahrzeugs 10 zum Erzeugen eines Unterdrucks genutzt wird, so dass sich der Druck-Saug-Sack 42 zusammenzieht und hierdurch über die Befestigungen 44, 46 das Flächenelement 30 in seinen Bereitstellungszustand zieht, wie dieses in Figuren 8 und 9 exemplarisch dargestellt ist. Ggf. kann auch die Saugfunktion auch verzichtet werden, wenn dieses nicht notwendig erscheint, um den Bereitstellungszustand zu erzielen oder wenn hierzu andere Maßnahmen, wie beispielsweise separate Federn oder ähnliches, vorgesehen sind.

In dem Bereitstellungszustand ist das Flächenelement 30 parallel zur Trägerplatte 25 angeordnet. Aus Stabilitätsgründen und wegen einer schöneren Optik wird ein Abstand zwischen der Luftstromabrisskante 38 und dem Fuß 53 des ersten Teilzugelements 51 mittels einer Abdeckelements 26 überbrückt, welches plattenartig im Bereich des Fußes 53 des ersten Teilzugelements 51 an dem ersten Teilzugelement 51 angeordnet ist.

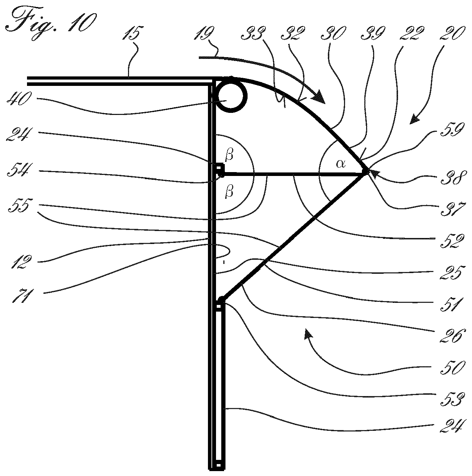

Das Ausführungsbeispiel nach Figur 10 entspricht den vorherigen Ausführungsbeispielen, wobei hierbei lediglich ein kleineres Druckelement 40 bzw. ein kleinerer Druck-Saug-Sack 42 verwendet wird, da es für die Anordnung unkritisch erscheint, welche Form beziehungsweise Dimension des Druckelements angewandt wird.

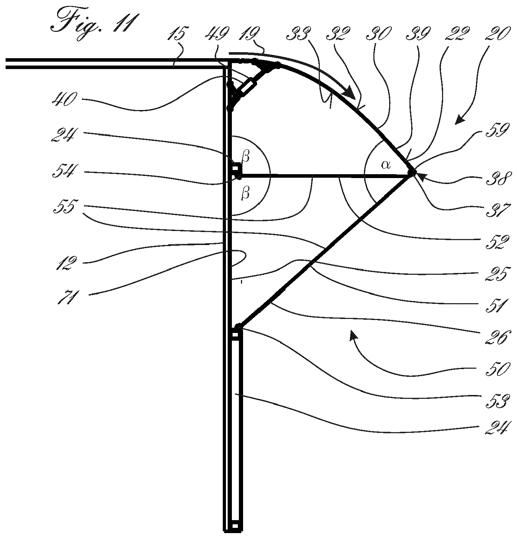

Die Figur 11 zeigt eine weitere unterschiedliche Ausbildung des Druckelements 40, wobei es im vorliegenden Ausführungsbeispiel als Zylinder-Kolben-Einheit mit einem Hydraulikzylinder 49 ausgeführt ist. Diese kann im Luftleitzustand entsprechend ausfahren und somit den Druck auf das Flächenelement 30 ausüben, während diese im Bereitstellungszustand einfährt und somit keinen Druck auf das Flächenelement 30 ausübt bzw. dieses sogar heranzieht.

Statt des Hydraulikzylinders 49 kann auch ein pneumatischer Zylinder zur Anwendung kommen.

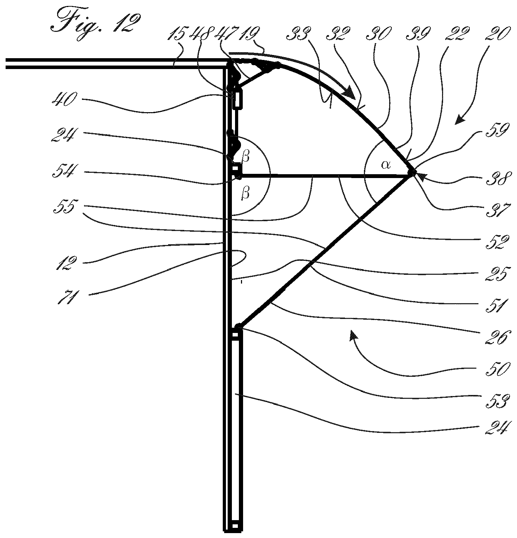

Wie anhand des in Figur 12 dargestellten Ausführungsbeispiels erkennbar, kann das Druckelement 40 auch über ein Gestänge 47 auf das Flächenelement 30 wirken. Hierbei spielt die Art des Antriebs zunächst nur eine untergeordnete Rolle, so dass hier ggf. auch ein Hydraulikzylinder bzw. ein pneumatischer Zylinder zur Anwendung kommen können.

Bei dem in Figur 12 dargestellten Ausführungsbeispiel kommt jedoch ein elektrischer Spindeltrieb zur Anwendung, wobei hier ggf. auch andere Antriebsarten mit oder ohne Gestänge 47 genutzt werden können.

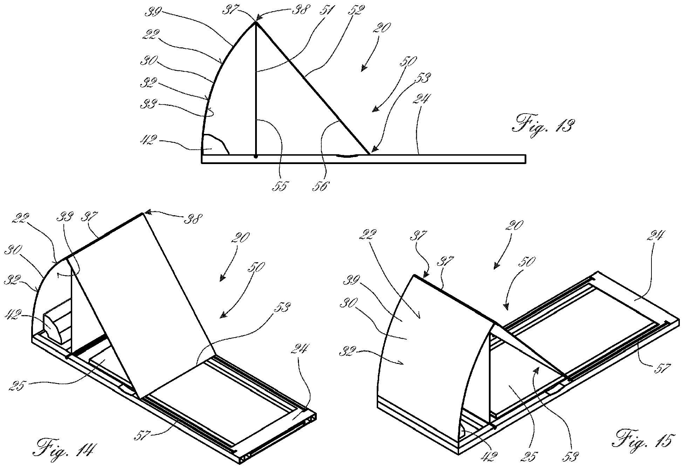

Eine alternative Luftleitflächenanordnung verwendet 20 als Druckelement 40 einen balgförmig ausgestalteten Druck-Saug-Sack 42, wie in den Figuren 13 bis 15 dargestellt. Dieser ist zum einen an der Trägerplatte 25 und zum anderen an dem Flächenelement 30 angeordnet und übt in Druckzustand beziehungsweise im aufgeblasenen Zustand den entsprechenden Druck auf das Flächenelement 30 aus. Im entleerten bzw. ausgesaugten Zustand faltet sich dieser Druck-Saug-Sack 42 auf besonders einfache Weise zusammen, sodass im Bereitzustellungszustand das Flächenelement 30 entsprechend angeordnet werden kann und das Druckelement 40 möglichst kontrolliert in dem Freiraum zwischen Flächenelement 30 und Trägerplatte 25 verweilen kann.

Auch ist bei diesem Ausführungsbeispiel das erste Teilzugelement 51 nicht als textiles Flächenelement 55 sondern als eigensteifes Flächenelement 56 bzw. als eigensteife Platte ausgebildet. Auch ist der Fuß 53 des ersten Teilzugelements 51 in einer Führung 57, die parallel zur Trägerplatte 25 ausgerichtet ist, angeordnet. Im Luftleitzustand ist dieses an sich unkritisch und führt zu kleiner nennenswerten Änderung, da auch diese Platte dann im Wesentlichen nur auf Zug beansprucht wird und der Fuß 53 des ersten Teilzugelements 51 in dem Druck-Saug-Sack 42 gerichteten Ende der Führung 57 befindlich ist.

Wird nun der Druck-Saug-Sack 42 des in Figuren 13 bis 15 dargestellten Ausführungsbeispiels ausgesaugt, so legt sich das Flächenelement 30 flach auf den Träger 24 und schiebt hierbei den Fuß 53 des eigensteifen Flächenelements 56 bzw. des ersten Teilzugelements 51 entlang der Führung 57, wobei die Erstreckungen des Flächenelements 30, des ersten Teilzugelements 51 und der Führung 57 derart aufeinander abgestimmt sind, dass im Bereitstellungszustand das Flächenelement 30, und das erste Teilzugelement 51 parallel zum Träger 24 ausgerichtet sind und der Fuß 53 an dem Ende der Führung 57 befindlich ist, das dem Druck-Saug-Sack 42 abgewandt ist.

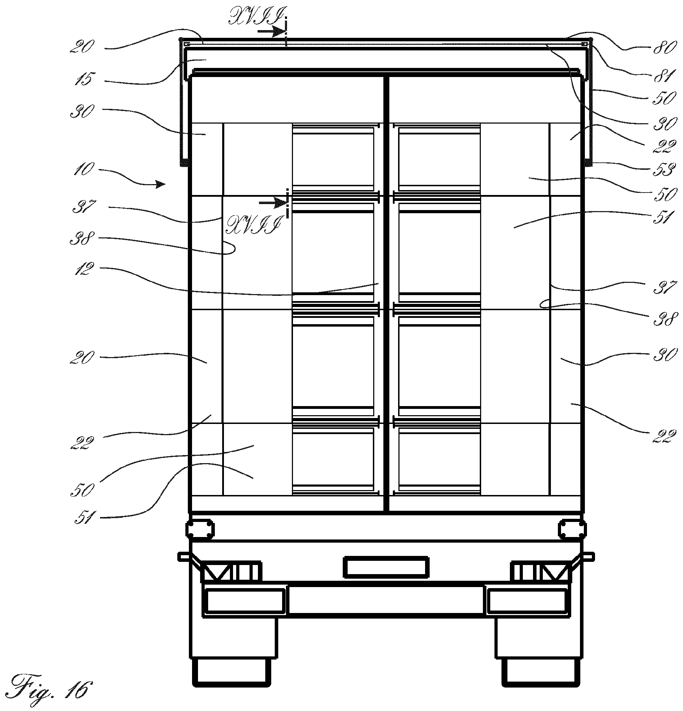

In dem Ausführungsbeispiel nach Figur 16 sind mehrere der in Figuren 13 bis 15 dargestellten Luftleitflächenanordnung 20 entlang der Heckklappe 12 angeordnet, wobei die Leitflächen 22 der Luftleitflächenanordnung 20 jeweils nach außen gerichtet sind, sodass die am Auflieger 15 vorbei strömende Luft über die an der hinteren Kante des Aufliegers 15 anschließende Leitfläche 22 abgeleitet werden kann.

Bei diesem Ausführungsbeispiel ist die Heckklappe 12 als Lamellentor ausgebildet, welches noch oben unter das Dach des Aufliegers 15 geschoben werden kann. Die Breite der einzelnen Luftleitflächenanordnungen 20 nach Figuren 13 bis 15 senkrecht zur Luftleitlinie 39 und parallel zur Trägerplatte 25 entspricht der Höhe der einzelnen Lamellen, so dass diese Luftleitflächenanordnungen 20 gemeinsam mit den Lamellen verlagert werden können.

Hierbei sind jeweils über die gesamte Breite der Heckklappe 12 bzw. jeder der Lamellen zwei Luftleitflächenanordnungen 20 angeordnet, sodass jeweils rechts und links außen die Leitfläche 22 angeordnet ist. Durch eine derartige Anordnung der Luftleitflächenanordnungen 20 kann ggf. auch eine mittig zweigeteilte Heckklappe 12 problemlos geöffnet werden, als auch die als Rolllade ausgebildete Heckklappe 12.

Um jedoch noch eine Leifläche 22 an der Oberkante des Aufliegers 15 bereitzustellen, ist oberhalb des Aufliegers 15 eine alternative Luftleitflächenanordnung 20 angeordnet.

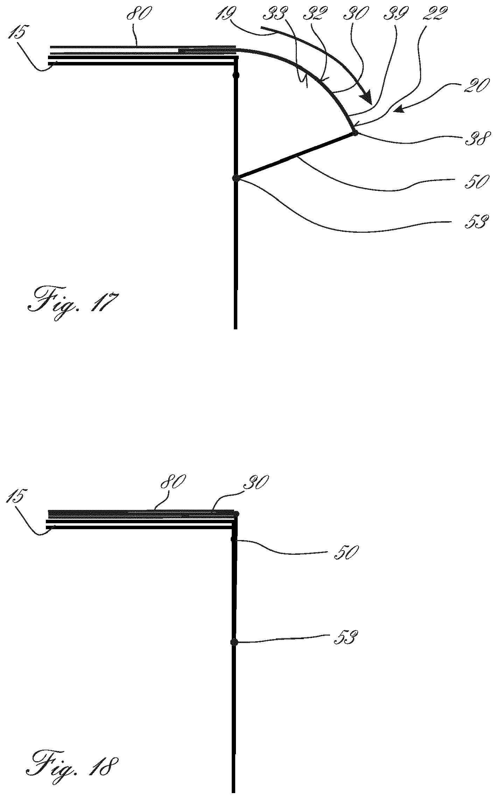

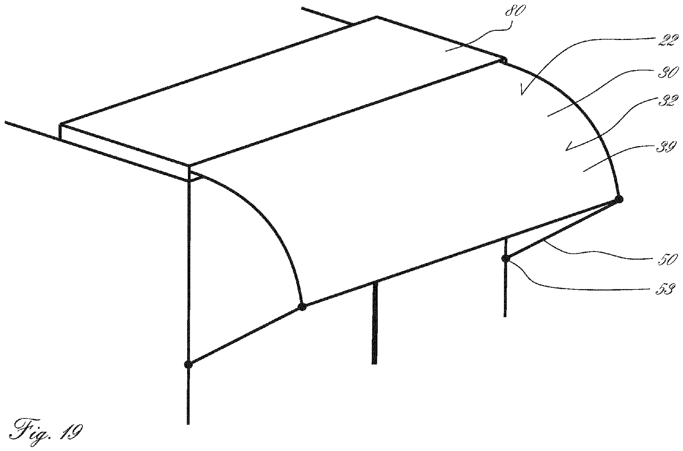

Diese, in Figuren 17 bis 19 im Detail dargestellte, entsprechende Luftleitflächenanordnung 20 an der Oberseite des Aufliegers 15 ist die der Luftstromabrisskante 38 gegenüberliegende Kante mit einem Zug-Druck-Element 80, wirkverbunden, wobei dann ein Zugelement 50 ausreicht, um im Zusammenspiel mit dem Zug-Druck-Element 80 eine Biegung des Flächenelements 30 entsprechend der gewünschten Luftleitlinie 39 vorzusehen.

Im konkreten umfasst das Zug-Druck-Element 80 eine Führung 81, in welchem das Flächenelement 30 geführt ist, wobei dieses über das Zugelement 50, welches um seinen Fuß 58 rotieren kann, in die gewünschten gebogenen Luftleitzustand verbracht werden kann.

Das Flächenelement 30 weist hierbei wieder eine Außenseite 32 und eine Innenseite 33 auf und stellt eine entsprechende Leitfläche 22 bereit, entlang welcher die Luftleitlinie 39 verläuft, welche die Richtung des Luftstroms 19 bestimmt.

Das Zug-Druck-Element 80 stellt mithin sowohl den Druck, welcher dem Zugelement 50 entgegen wirkt und bei den vorstehend erläuterten Ausführungsbeispielen durch das Druckelement 40 aufgebracht wird, als auch den Zug bereit, der bei den vorstehend erläuterten Ausführungsbeispielen durch das Ankerelement 60 aufgebracht wird.

Wie anhand einem Vergleich der Figuren 17 und 18 ersichtlich, kann das Flächenelement 30 in das Zug-Druck-Element 80 eingezogen werden, so dass das erste Teilzugelement 51 in Richtung Heckklappe 12 bzw. Auflieger 15 verfährt, bis sich das Flächenelement 30 im Bereitstellungzustand gänzlich in dem Zug-Druck-Element 80 befindet und somit die Heckklappe 12 des Aufliegers 15 betriebssicher geöffnet werden kann.

Das Zug-Druck-Element 80 weist eine geschlossene Form auf, sodass das Flächenelement 30 mittels der Führung 81 entsprechend geführt werden kann, wobei das Zug-Druck-Element 80 ausreichend lang ausgestattet sein sollte, um das gesamte Flächenelement 80 aufzunehmen.

Das Zugelement 50 kann insbesondere bei dieser Ausführungsform als zwei einzelne außen an das Flächenelement 30 angreifende Stangen ausgestaltet sein, welche um jeweils einen Fuß 58 rotieren bzw. drehen können.

Alternativ kann eine entsprechend Luftleitflächenanordnung 20 auch auf dem Führerhaus der Zugmaschine 14 angebracht werden, um den Strömungswiderstand bei Bedarf zu senken.

**Bezugszeichenliste:**

| | | | |
|---|---|---|---|
| 10 | Kraftfahrzeug | 47 | Gestänge |
| 12 | Heckklappe | 48 | elektrischer Spindeltrieb |
| 14 | Zugmaschine | 49 | Hydraulikzylinder |
| 15 | Auflieger | | |
| 19 | Luftstrom | 50 | Zugelement |
| | | 51 | erstes Teilzugelement |
| 20 | Luftleitflächenanordnung | 52 | zweites Teilzugelement |
| 22 | Leitfläche | 53 | Fuß des ersten Teilzugelements 51 |
| 24 | Träger | 54 | Fuß des zweiten Teilzugelements 52 |
| 25 | Trägerplatte | 55 | textiles Flächenelement |
| 26 | Abdeckelement | 56 | eigensteifes Flächenelement |
| 28 | Ausnehmung | 57 | Führung |
| | | 58 | Fuß des Zugelements 50 |
| 30 | Flächenelement | 59 | Kederverbindung |
| 32 | Außenseite | | |
| 33 | Innenseite | 60 | Ankerelement |
| 37 | Linienverbindung | 62 | Drehgelenk |
| 38 | Luftstromabrisskante | | |
| 39 | Luftleitlinie | 71 | Linie |
| | | α | Winkel |
| 40 | Druckelement | β | Winkel |
| 42 | Druck-Saug-Sack | | |
| 43 | Ventil | 80 | Zug-Druck-Element |
| 44 | Befestigung des Druckelements 40 an Trägerplatte 25 | 81 | Führung |
| 46 | Befestigung des Druckelements 40 an Flächenelement 30 | | |

## Patentansprüche

1. Luftleitflächenanordnung (20) mit einer Leitfläche (22), entlang welcher ein Luftstrom (19) leitbar ist und welche wenigstens ein eigensteifes und biegeelastisches Flächenelement (30) mit einer den Luftstrom (19) leitenden Außenseite (32) und einer Innenseite (33) umfasst, **dadurch gekennzeichnet, dass** das Flächenelement (30) durch wenigstens ein Druckelement (40) und wenigstens ein Zugelement (50) entlang einer Luftleitlinie (39) gegen die Eigensteifigkeit und Biegeelastizität des Flächenelements (30) gebogen bzw. biegbar ist.

2. Luftleitflächenanordnung (20) nach Anspruch 1, **dadurch gekennzeichnet, dass** das Druckelement (40), vorzugsweise entlang der Luftleitlinie (19) und/oder in einer die Luftleitlinie (19) schneidenden Ebene, zwischen dem Zugelement (50) und einem Ankerelement (60) auf das Flächenelement (30) wirkt.

3. Luftleitflächenanordnung (20) nach Anspruch 2, **dadurch gekennzeichnet, dass** das Ankerelement (60) durch ein Drehgelenk (62) gebildet ist.

4. Luftleitflächenanordnung (20) nach einem der Ansprüche 1 bis 3, **dadurch gekennzeichnet, dass** das Flächenelement (30) und vorzugsweise die Leitfläche (22) senkrecht zur Luftleitlinie (39) eben ausgebildet sind.

5. Luftleitflächenanordnung (20) nach einem der Ansprüche 1 bis 4, **dadurch gekennzeichnet, dass** die Luftleitflächenanordnung (20) einen Luftleitzustand, in welchem das Flächenelement (30) entlang der Luftleitlinie (39) gebogen ist, und einen Bereitstellungszustand, in welchem das Flächenelement (30), das Druckelement (40) und/oder das (50) Zugelement entlastet sind, aufweist.

6. Luftleitflächenanordnung (20) nach Anspruch 5, **dadurch gekennzeichnet, dass** die Luftleitflächenanordnung (20), insbesondere die Leitfläche (22) und/oder das Flächenelement (30), in dem Bereitstellungszustand entspannt ist.

7. Luftleitflächenanordnung (20) nach Anspruch 5 oder 6, **dadurch gekennzeichnet, dass** Druckelement (40) ziehend auf das Flächenelement wirken kann und im Luftleitzustand drückend und im Bereitstellungszustand ziehend auf das Flächenelement (30) wirkt.

8. Luftleitflächenanordnung (20) nach einem der Ansprüche 1 bis 7, **dadurch gekennzeichnet, dass** das Druckelement (40) pneumatisch und/oder als Drucksack oder als Druck-Saug-Sack (42) ausgebildet ist.

9. Luftleitflächenanordnung (20) nach einem der Ansprüche 1 bis 8, **dadurch gekennzeichnet, dass** das Zugelement (50) zumindest ein erstes Teilzugelement (51) und ein zweites Teilzugelement (52) umfasst, die linear unabhängig auf das Flächenelement (30) wirken bzw. wirken können.

10. Luftleitflächenanordnung (20) nach einem der Ansprüche 1 bis 9, **dadurch gekennzeichnet, dass** das Zugelement (50) bzw. zumindest eines und vorzugsweise beide der Teilzugelemente (51, 52) nur auf Zug beanspruchbare Elemente und/oder flächige Elemente, vorzugsweise textile Flächenelemente (55), sind.

11. Luftleitflächenanordnung (20) nach einem der Ansprüche 1 bis 10, **dadurch gekennzeichnet, dass** das Zugelement (50) an einer Luftstromabrisskante (38) des Flächenelements (30) angreift.

12. Luftleitflächenanordnung (20) nach einem der Ansprüche 1 bis 11, **dadurch gekennzeichnet, dass** das Zugelement (50) über eine Linienverbindung (37) mit dem Flächenelement (39), beispielsweise über eine Kederverbindung (59), wirkverbunden ist.

13. Luftleitflächenanordnung (20) nach einem der Ansprüche 1 bis 12, **gekennzeichnet durch** wenigstens zwei Leitflächen (22), wobei die Luftleitlinien (39) der beiden Leitflächen (22) unterschiedlich ausgebildet sind.

14. Luftleitflächenanordnung (20) nach einem der Ansprüche 1 bis 13, **dadurch gekennzeichnet, dass** das Flächenelement (30), das Ankerelement (60), das Druckelement (40) und/oder das Zugelement (50) an einem Träger (24) befestigt sind.

15. Kraftfahrzeug (10) mit einer Luftleitflächenanordnung (20) nach einem der Ansprüche 1 bis 14 an einer Baugruppe des Kraftfahrzeugs (10), wie an einer Heckklappe (12) oder an einem Führerhaus (14), **dadurch gekennzeichnet, dass** der Träger (24), das Flächenelement (30), das Ankerelement (60), das Druckelement (40) und/oder das Zugelement (50) an der Baugruppe des Kraftfahrzeugs (10) befestigt ist.
